# EUROPÄISCHE PATENTSCHRIFT

(11) **EP 2 422 104 B1**
(45) Veröffentlichungstag und Bekanntmachung des Hinweises auf die Patenterteilung: **15.05.2013**
(21) Anmeldenummer: 10714435.4
(22) Anmeldetag: 30.03.2010
(51) Int. Cl.: F16D 43/16, A62B 1/10

(54) **FLIEHKRAFTKUPPLUNG**
CENTRIFUGAL CLUTCH
EMBRAYAGE CENTRIFUGE

(30) Priorität: 21.04.2009 DE 202009005927 U
(43) Veröffentlichungstag der Anmeldung: 29.02.2012
(73) Patentinhaber: Skylotec GmbH, 56567 Neuwied (DE)
(72) Erfinder: RINKLAKE, Kai, 56567 Neuwied (DE)
(74) Vertreter: Zeitler - Volpert - Kandlbinder
(86) Internationale Anmeldenummer: PCT/EP2010/002026
(87) Internationale Veröffentlichungsnummer: WO 2010/121698

(56) Entgegenhaltungen:
- FR-A1- 2 521 860
- US-A- 5 740 894

## Beschreibung

Die vorliegende Erfindung betrifft eine Fliehkraftkupplung mit einem Rotor und einem Kupplungsbauteil, wobei am Rotor wenigstens ein Fliehgewicht relativ zum Rotor bewegbar derart angeordnet und ausgebildet ist, dass unterhalb einer vorbestimmten Drehzahl des Rotors das Fliehgewicht beabstandet von dem Kupplungsbauteil an dem Rotor in einer ersten Stellung angeordnet ist, so dass der Rotor relativ zum Kupplungsbauteil frei drehbar ist, und oberhalb der vorbestimmten Drehzahl des Rotors unter einer Zentripetalkraft eine Bewegung relativ zum Rotor in eine zweite Stellung ausführt, so dass das Fliehgewicht einen mechanischen Kraftschluss zwischen dem Rotor und dem Kupplungsbauteil herstellt, gemäß dem Oberbegriff des Anspruchs 1. Die Erfindung betrifft ferner ein Auffanggerät, insbesondere Steigschutzläufer, welches mit einer zu sichernden Person an einer als Sicherungseinrichtung dienenden beweglichen oder festen Führung, insbesondere Sicherungsschiene, Steigschutzleiter oder Sicherungsseil, mitläuft, mit einer Fliehkraftkupplung, gemäß dem Oberbegriff des Anspruchs 11.

Eine Fliehkraftkupplung dient zum selbsttätigen, drehzahlabhängigen Herstellen einer kraftschlüssigen Verbindung zwischen einem Rotor und einem Kupplungsbauteil. Bei bestimmten Anwendungen muss die Fliehkraftkupplung hinsichtlich des Bauraumbedarfs klein sein und gleichzeitig hohe Kräfte zwischen dem Rotor und dem Kupplungsbauteil übertragen können. Derartige Anwendungen sind beispielsweise Auffanggeräte bzw. Steigschutzläufer mit selbsttätiger Auffangfunktion. Bei herkömmlichen Fliehkraftkupplungen erfolgt die Kraftübertragung dadurch, dass die Zentripetalkraft entsprechende Fliehgewichte radial nach außen an ein Gehäuse drückt, bis der Anpressdruck genug Reibschluss erzeugt. Hierfür ist sowohl eine hohe Drehzahl, als auch ein gewisser Durchmesser notwendig, um genug Zentrifugalkraft zu erzeugen und auch genug Masse in den Fliehgewichten unterzubringen. Da die Kupplung aber für ein Auffanggerät besonders klein sein soll, besteht ein Widerspruch.

Das Dokument DE 1103691 offenbart eine Fliehkraftkupplung gemäβ dem Oberbegriff des Anspruchs 1.

Der Erfindung liegt die Aufgabe zugrunde, eine Fliehkraftkupplung der o.g. Art derart zu verbessert, dass bereits bei kleinen geometrischen Abmessungen und niedrigen Drehzahlen ein zuverlässiger Kraftschluss zwischen dem Rotor und dem Kupplungsbauteil erzielt wird.

Diese Aufgabe wird erfindungsgemäß durch eine Fliehkraftkupplung der o.g. Art mit den in Anspruch 1 gekennzeichneten Merkmalen und durch ein Auffanggerät der o.g. Art mit den in Anspruch 11 gekennzeichneten Merkmalen gelöst. Vorteilhafte Ausgestaltungen der Erfindung sind in den weiteren Ansprüchen beschrieben.

Bei einer Fliehkraftkupplung der o.g. Art ist es erfindungsgemäß vorgesehen, dass das Fliehgewicht eine erste Verzahnung und das Kupplungsbauteil eine zweite Verzahnung derart aufweisen, dass oberhalb der vorbestimmten Drehzahl die erste Verzahnung und die zweite Verzahnung ineinander greifen und dadurch eine formschlüssige Verbindung zwischen dem Rotor und dem Kupplungsbauteil herstellen.

Dies hat den Vorteil, dass mit einer geometrisch kleinen Fliehkraftkupplung mit geringem Bauraumbedarf bereits bei niedrigen Werten für die vorbestimmte Drehzahl des Rotors besonders hohe Kräfte zwischen dem Rotor und dem Kupplungsbauteil übertragen werden können bzw. eine wirksame kraft- und formschlüssige Verbindung erzielt werden kann.

Zweckmäßigerweise ist die erste Verzahnung an einer dem Kupplungsbauteil oberhalb der vorbestimmten Drehzahl zugewandten Fläche des Fliehgewichtes ausgebildet.

In einer bevorzugten Ausführungsform ist die zweite Verzahnung an einer dem Fliehgewicht zugewandten Wandung des Kupplungsbauteils ausgebildet.

Einen besonders guten Kraftschluss mit bündig ineinander greifenden Verzahnungen erzielt man dadurch, dass die erste Verzahnung und die zweite Verzahnung identisch ausgebildet sind.

Ein sicheres Halten des Fliehgewichtes in der oder nahe der ersten Stellung unterhalb der vorbestimmten Drehzahl des Rotors erzielt man dadurch, dass ein Federelement vorgesehen ist, welches das Fliehgewicht in Richtung der ersten Stellung mit Kraftbeaufschlagt. Der Rotor weist bevorzugt eine Bohrung auf, in der das Federelement angeordnet ist. Die Bohrung ist beispielsweise senkrecht zu einer Längsachse des Rotors ausgebildet.

Eine besonders funktionssichere Ausführungsform erzielt man dadurch, dass das Fliehgewicht als ein Ringsegment des Rotors ausgebildet ist.

Einen verklemmende, formschlüssige Verbindung zwischen dem Rotor und dem Kupplungsbauteil durch eine schiefe Ebene erzielt man dadurch, dass sich das Fliehgewicht auf wenigstens einer, insbesondere zwei, Flächen des Rotors abstützt, die in einer Ebene parallel zu einer Längsachse des Rotors angeordnet ist.

Bei einem Auffanggerät der o.g. Art ist es erfindungsgemäß vorgesehen, dass die Fliehkraftkupplung wie zuvor beschrieben ausgebildet ist.

Dies hat den Vorteil, dass ein Auffanggerät mit kleinen Abmessungen bei gleichzeitig hoher Wirkung des Auffangmechanismus zur Verfügung steht.

Die Erfindung wird im Folgenden anhand der Zeichnung näher erläutert. Diese zeigt in:
- Fig. 1: eine bevorzugte Ausführungsform einer erfindungsgemäßen Fliehkraftkupplung in perspektivischer Ansicht,
- Fig. 2: die Fliehkraftkupplung gemäß Fig. 1 in Seitenansicht,
- Fig. 3: eine Detailansicht der Fliehkraftkupplung gemäß Fig. 1 in perspektivischer Ansicht,
- Fig. 4: eine Detailansicht der Fliehkraftkupplung gemäß Fig. 2 in Seitenansicht,
- Fig. 5: eine Detailansicht der Fliehkraftkupplung gemäß Fig. 2 in teilweise geschnittener Seitenansicht,
- Fig. 6: ein Kupplungsbauteil der Fliehkraftkupplung gemäß Fig. 1 in Form eines Gehäuses in Seitenansicht,
- Fig. 7: das Kupplungsbauteil gemäß Fig. 6 in perspektivischer Ansicht,
- Fig. 8: eine Detailansicht des Bereiches A von Fig. 6,
- Fig. 9: einen Rotor der Fliehkraftkupplung gemäß Fig. 1 in perspektivischer Ansicht,
- Fig. 10: den Rotor gemäß Fig. 9 in Vorderansicht,
- Fig. 11: den Rotor gemäß Fig. 9 in einer Seitenansicht,
- Fig. 12: den Rotor gemäß Fig. 9 in einer weiteren Seitenansicht,
- Fig. 13: ein Fliehgewicht der Fliehkraftkupplung gemäß Fig. 1 in perspektivischer Ansicht,
- Fig. 14: das Fliehgewicht gemäß Fig. 10 in Seitenansicht,
- Fig. 15: das Fliehgewicht gemäß Fig. 10 in Draufsicht und
- Fig. 16: das Fliehgewicht gemäß Fig. 10 in Vorderansicht.

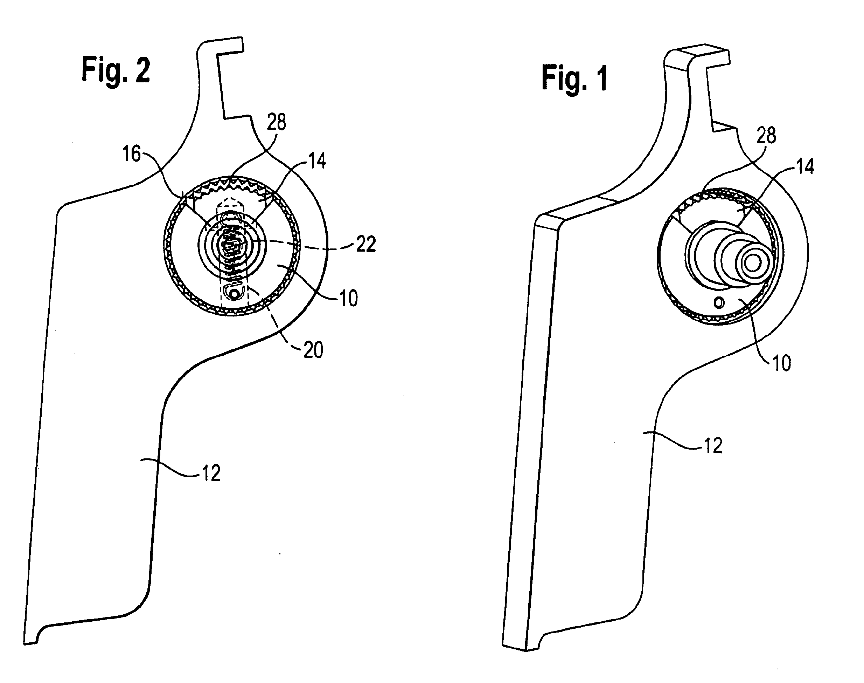

Die in Fig. 1 bis 5 dargestellte, bevorzugte Ausführungsform einer erfindungsgemäßen Fliehkraftkupplung umfasst einen Rotor 10, ein Kupplungsbauteil 12 und ein Fliehgewicht 14. Die Ausführungsform mit nur einem Fliehgewicht ist lediglich beispielhaft. Es können auch zwei, drei oder mehr Fliehgewichte in der Art des dargestellten und nachfolgend beschriebenen Fliehgewichtes 14 über den Umfang des Rotors 10 insbesondere gleichmäßig verteilt vorgesehen sein. Das Kupplungsbauteil 12 ist als Gehäuse mit einer Innenwandung 16 ausgebildet, welche den Rotor 10 radial vollumfänglich umgibt. An einer dem Rotor 10 zugewandten Innenseite der Innenwandung 16 ist eine Verzahnung 18 ausgebildet. In dem Rotor 10 ist weiterhin eine Bohrung 20 zur Aufnahme eines Federelementes 22, beispielsweise einer Spiralfeder, ausgebildet.

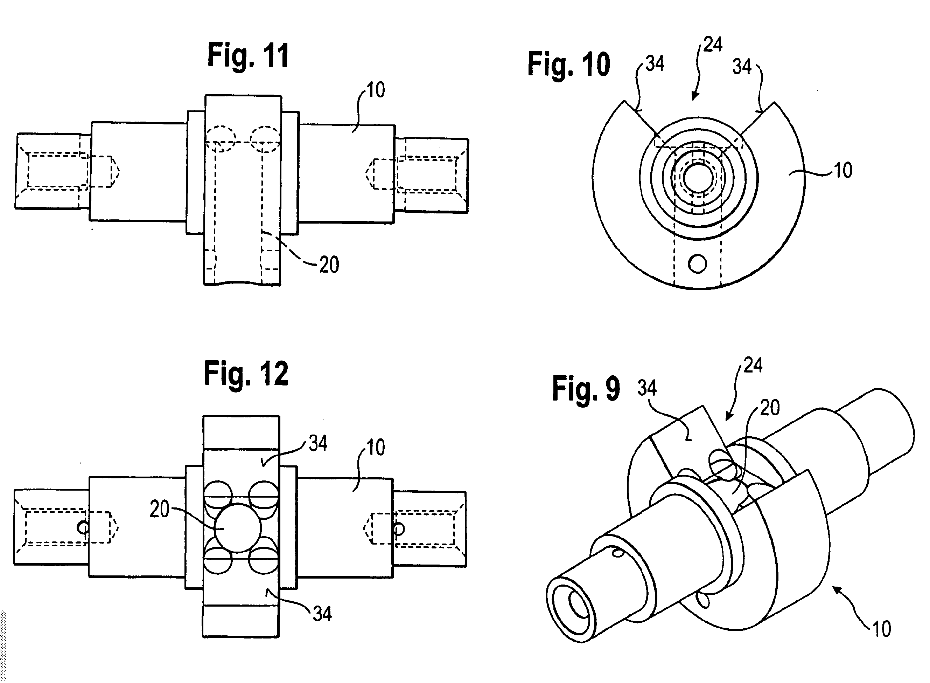

Wie insbesondere aus Fig. 9 bis 11 ersichtlich, ist der Rotor 10 im Bereich eines Ringsegmentes 24 über eine vorbestimmte axiale Länge ausgeschnitten. Diese vorbestimmte axiale Länge des Ringsegmentausschnittes 24 entspricht im Wesentlichen einer axialen Länge der Innenwandung 16 des Kupplungsteiles 12 oder ist etwas kürzer.

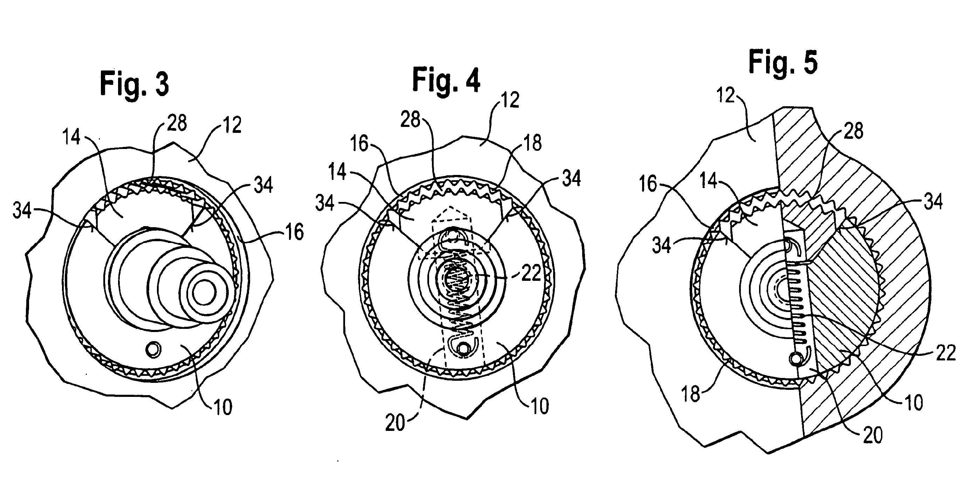

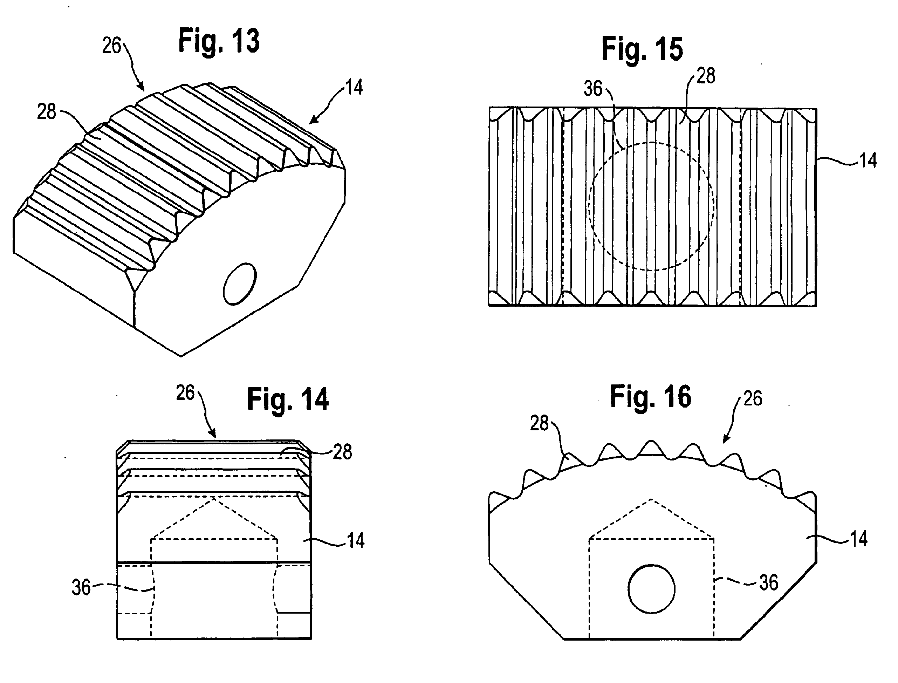

Wie insbesondere aus Fig. 13 bis 16 ersichtlich, ist das Fliehgewicht 14 derart ausgebildet, dass es im Wesentlichen dem Ringsegmentausschnitt 24 des Rotors 10 entspricht. Dadurch passt das Fliehgewicht 14 in den Ringsegmentausschnitt 24 des Rotors 10 derart, dass bei Anordnung des Fliehgewichtes 14 in einer ersten Stellung relativ zum Rotor 10, wie in Fig. 1 bis 3 dargestellt, an einer der Innenwandung 16 des Kupplungsteiles 12 zugewandten Seite 26 des Fliehgewichtes 14 die Abmessungen des Fliehgewichtes 14 in radialer Richtung bzgl. des Rotors 10 innerhalb eines Außenumfangs des Rotors 10 im Bereich des Ringsegmentausschnittes 24 des Rotors 10 bleiben. Mit anderen Worten überragt das in den Ringsegmentausschnitt 24 des Rotors 10 eingesetzte Fliehgewicht 14 den Rotor 10 in radialer Richtung nicht, wenn sich das Fliehgewicht in der in beispielsweise in Fig. 4 dargestellten ersten Stellung befindet.

An der Seite 26 des Fliehgewichtes 14 ist eine erste Verzahnung 28 ausgebildet. Diese erste Verzahnung 28 entspricht im Wesentlichen der zweiten Verzahnung 18 des Kupplungsbauteiles 12. In der ersten Stellung sind die erste und zweite Verzahnung außer Eingriff, so dass der Rotor 10 frei innerhalb des Kupplungsbauteiles 12 drehbar ist.

Das Fliehgewicht 14 ist mit dem Rotor 10 über das Federelement 22 mechanisch verbunden. Dieses Federelement 22 ist elastisch verformbar und derart angeordnet und ausgebildet, dass es das Fliehgewicht 14 in Richtung der ersten Stellung radial mit Kraft beaufschlagt. Mit anderen Worten ist das Federelement 22 auf Zug vorgespannt. Auf diese Weise befindet sich das Fliehgewicht 14 in oder nahe der ersten Stellung, solange in radialer Richtung keine Kraft oder eine geringe Kraft auf das Fliehgewicht 14 wirkt, welche kleiner ist als die rückstellende Kraft des Federelementes 22 an der Position des Fliehgewichtes in einer zweiten Stellung beabstandet von der ersten Stellung, wobei die zweite Stellung nachfolgend näher erläutert wird. Durch Drehung des Rotors 10 wirkt mit zunehmende Drehzahl eine immer größer werdende Zentripetalkraft auf das Fliehgewicht 14 in radialer Richtung weg von der ersten Stellung hin zu einer zweiten Stellung (nicht dargestellt) des Fliehgewichtes 14, in der das Fliehgewicht 14 an die Innenwandung 16 des Kupplungsbauteiles 12 anschlägt und die erste und zweite Verzahnung 28, 18 ineinander greifen. Da mit zunehmender Ausdehnung des Federelementes 22 in radialer Richtung auch die rückstellende Kraft des Federelementes 22 ansteigt, erfolgt die Bewegung des Fliehgewichtes 14 in radialer Richtung nicht plötzlich ruckartig von der ersten Stellung in die zweite Stellung bei Erreichen einer bestimmten Drehzahl des Rotors 10 sondern mit zunehmender Drehzahl des Rotors 10 stufenlos. Hierbei bestimmt die Geschwindigkeit der Drehzahländerung wie plötzlich bzw. ruckartig die Bewegung des Fliehgewichtes 14 in radialer Richtung erfolgt. Sobald bei einer vorbestimmten Drehzahl des Rotors 10 die Zentripetalkraft gleich bzw. größer ist als die radial in Richtung der ersten Stellung rückstellende Kraft des Federelementes 22 an der Position der zweiten Stellung des Fliehgewichtes 14, hat sich das Fliehgewicht 14 in radialer Richtung unter der Einwirkung der Zentripetalkraft bis in die zweite Stellung bewegt und die erste Verzahnung 28 und die zweite Verzahnung 18 greifen ineinander. Dies stellt eine formschlüssige Verbindung zwischen dem Rotor 10 und dem Kupplungsbauteil 12 her, wobei durch die nicht lediglich reibschlüssige Verbindung, wie bei herkömmlichen Fliehkraftkupplungen, mittels der formschlüssigen Verbindung hohe Kräfte zwischen dem Rotor 10 und dem Kupplungsbauteil 12 im Wesentlichen unabhängig von der Drehzahl des Rotors 10 übertragen werden können, solange die Drehzahl über der vorbestimmten Drehzahl ist.

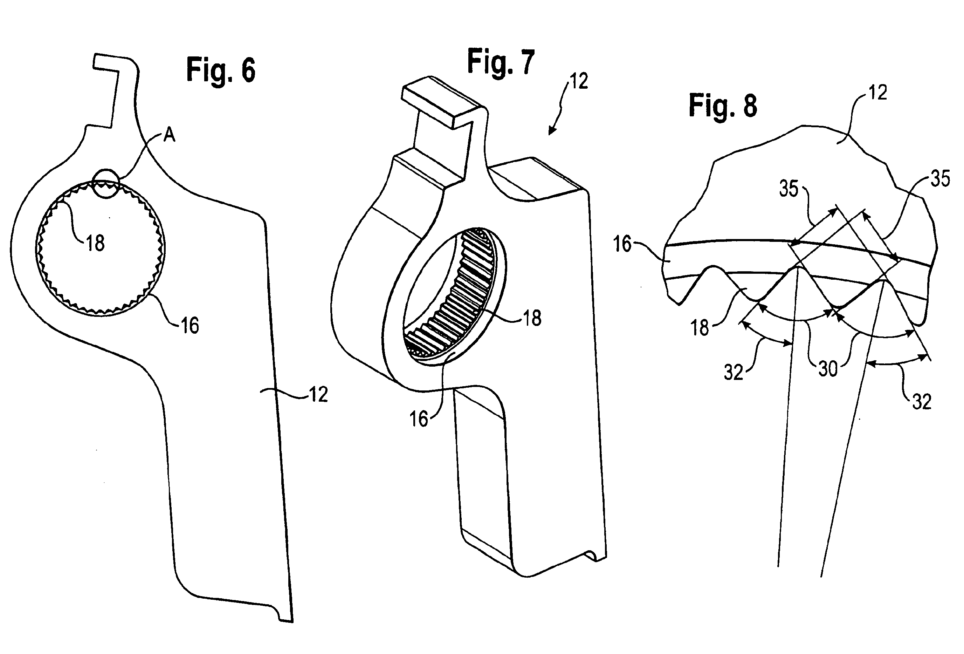

Die erste und zweite Verzahnung 28, 18 weisen, wie in Fig. 8 beispielhaft für die zweite Verzahnung 18 dargestellt, einen vorbestimmten Flankenwinkel 30 von beispielsweise 70° bis 90°, insbesondere 80°, bzw. einen Flankenhalbwinkel 32 von beispielsweise 35° bis 45°, insbesondere 40°, auf. Weiterhin weist die erste und zweite Verzahnung 28, 18 eine Flankenlänge 35 von beispielsweise 0,5 mm bis 2 mm, insbesondere 1 mm, auf.

Durch die Ausbildung des Fliehgewichtes 14 als Ringsegment des Rotors 10 ergeben sich zwei bzgl. einer Längsachse der Bohrung 20 schräge Anlageflächen 34 zwischen dem Fliehgewicht 14 und dem Ringsegmentausschnitt 24 des Rotors 10. Diese Anlageflächen 34 definieren Ebenen im Raum, die jeweils parallel zur Längsachse der Bohrung sind. Das Fliehgewicht 14 bewegt sich bei dem Übergang von der ersten Stellung in die zweite Stellung je nach Drehrichtung des Rotors 10 auf einer dieser schiefen Anlageflächen 34. Dies bewirkt beim Anschlagen des Fliehgewichtes 14 an der Innenwandung 16 des Kupplungsbauteiles 12, dass die sich aufgrund der Zentripetalkraft ergebende Andruckkraft des Fliehgewichtes 14 an die Innenwandung 16 des Kupplungsbauteiles 12 nicht über den gesamten Bereich des Eingriffs der ersten Verzahnung 28 in die zweite Verzahnung 18 bzw. über die gesamte Seite 26 des Fliehgewichtes 14 senkrecht zur Innenwandung 16 des Kupplungsbauteiles 12 ausgerichtet ist. Hierdurch ergibt sich aufgrund erhöhter Reibung von aneinander anschlagenden Flanken der Verzahnungen 28, 18 eine Verklemmung des Eingriffs der ersten und zweiten Verzahnung 28, 18 ineinander. Dies erzielt in vorteilhafter Weise bereits bei geringfügiger Überschreitung der vorbestimmten Drehzahl bzw. Einschaltdrehzahl des Rotors 10, bei der die Zentripetalkraft gleich bzw. größer ist als die radial in Richtung der ersten Stellung rückstellende Kraft des Federelementes 22 an der Position der zweiten Stellung des Fliehgewichtes 14, einen hohen Kraftschluss zwischen Rotor 10 und Kupplungsbauteil 12 aufgrund der formschlüssigen Verbindung zwischen Rotor 10 und Kupplungsbauteil 12 mittels der ineinander greifenden Verzahnung 28, 18 zusammenwirkend mit der jeweiligen schrägen Anlagefläche 34. Hierdurch ist es möglich eine kleine Fliehkraftkupplung zu bauen, die bereits bei einer geringen Drehzahl sowie bei einer geringen Überschreitung der vorbestimmten Drehzahl bzw. Einschaltdrehzahl des Rotors 10 eine kraft- und formschlüssige Verbindung herstellt.

Wie insbesondere aus Fig. 13 bis 16 ersichtlich, weist das Fliehgewicht 14 ebenfalls eine Bohrung 36 auf, welche mit der Bohrung 20 im Rotor 10 fluchtet. Das Federelement 22 ist derart angeordnet, dass sich dieses bis in die Bohrung 35 des Fliehgewichtes 14 erstreckt.

## Patentansprüche

1. Fliehkraftkupplung mit einem Rotor (10) und einem Kupplungsbauteil (12), wobei am Rotor (10) wenigstens ein Fliehgewicht (14) relativ zum Rotor (10) bewegbar derart angeordnet und ausgebildet ist, dass unterhalb einer vorbestimmten Drehzahl des Rotors (10) das Fliehgewicht (14) beabstandet von dem Kupplungsbauteil (12) an dem Rotor (10) in einer ersten Stellung angeordnet ist, so dass der Rotor (10) relativ zum Kupplungsbauteil (12) frei drehbar ist, und oberhalb der vorbestimmten Drehzahl des Rotors (10) unter einer Zentripetalkraft eine Bewegung relativ zum Rotor (10) in eine zweite Stellung ausführt, so dass das Fliehgewicht (14) einen mechanischen Kraftschluss zwischen dem Rotor (10) und dem Kupplungsbauteil (12) herstellt,
**dadurch gekennzeichnet,**
**dass** das Fliehgewicht (14) eine erste Verzahnung (28) und das Kupplungsbauteil (12) eine zweite Verzahnung (18) derart aufweisen, dass oberhalb der vorbestimmten Drehzahl die erste Verzahnung (28) und die zweite Verzahnung (18) ineinander greifen und dadurch eine formschlüssige Verbindung zwischen dem Rotor (10) und dem Kupplungsbauteil (12) herstellen.

2. Fliehkraftkupplung nach Anspruch 1, **dadurch gekennzeichnet, dass** die erste Verzahnung (28) an einer dem Kupplungsbauteil (12) oberhalb der vorbestimmten Drehzahl zugewandten Fläche des Fliehgewichtes (14) ausgebildet ist.

3. Fliehkraftkupplung nach Anspruch 1 oder 2, **dadurch gekennzeichnet, dass** die zweite Verzahnung (18) an einer dem Fliehgewicht (14) zugewandten Wandung (16) des Kupplungsbauteils (12) ausgebildet ist.

4. Fliehkraftkupplung nach wenigstens einem der vorhergehenden Ansprüche, **dadurch gekennzeichnet, dass** die erste Verzahnung (28) und die zweite Verzahnung (18) identisch ausgebildet sind.

5. Fliehkraftkupplung nach wenigstens einem der vorhergehenden Ansprüche, **dadurch gekennzeichnet, dass** ein Federelement (22) vorgesehen ist, welches das Fliehgewicht (14) in Richtung der ersten Stellung mit Kraftbeaufschlagt.

6. Fliehkraftkupplung nach Anspruch 5, **dadurch gekennzeichnet, dass** der Rotor (10) eine Bohrung (20) aufweist, in der das Federelement (22) angeordnet ist.

7. Fliehkraftkupplung nach Anspruch 6, **dadurch gekennzeichnet, dass** die Bohrung (20) senkrecht zu einer Längsachse des Rotors (10) ausgebildet ist.

8. Fliehkraftkupplung nach wenigstens einem der vorhergehenden Ansprüche, **dadurch gekennzeichnet, dass** das Fliehgewicht (14) als ein Ringsegment des Rotors (10) ausgebildet ist.

9. Fliehkraftkupplung nach wenigstens einem der vorhergehenden Ansprüche, **dadurch gekennzeichnet, dass** das Kupplungsbauteil (12) den Rotor (10) radial umgibt.

10. Fliehkraftkupplung nach Anspruch 8 und 9, **dadurch gekennzeichnet, dass** sich das Fliehgewicht (14) auf wenigstens einer, insbesondere zwei, Flächen (34) des Rotors (10) abstützt, die in einer Ebene parallel zu einer Längsachse des Rotors (10) angeordnet ist.

11. Auffanggerät, insbesondere Steigschutzläufer, welches mit einer zu sichernden Person an einer als Sicherungseinrichtung dienenden beweglichen oder festen Führung, insbesondere Sicherungsschiene, Steigschutzleiter oder Sicherungsseil, mitläuft, mit einer Fliehkraftkupplung,
**dadurch gekennzeichnet,**
**dass** die Fliehkraftkupplung gemäß wenigstens einem der vorhergehenden Ansprüche ausgebildet ist.

## Claims

1. Centrifugal clutch having a rotor (10) and a coupling component (12) of the clutch, at least one centrifugal weight (14) being arranged on the rotor (10), and designed, to be movable relative to the rotor (10), in such a way that, below a predetermined speed of revolution of the rotor (10), the centrifugal weight (14) is arranged on the rotor (10) in a first position spaced away from the coupling component (12) of the clutch, the rotor (10) thus being freely rotatable relative to the coupling component (12) of the clutch, and in such a way that, above the predetermined speed of revolution of the rotor (10), the centrifugal weight (14) performs a movement relative to the rotor (10) under a centripetal force to a second position, the centrifugal weight (14) thus making a mechanical connection by applied force between the rotor (10) and the coupling component (12) of the clutch, **characterised in that** the centrifugal weight (14) has a first set of teeth (28) and the coupling component (12) of the clutch has a second set of teeth (18) such that the first set of teeth (28) and second set of teeth (18) engage in one another above the predetermined speed of revolution and thus make a positively interengaged connection between the rotor (10) and the coupling component (12) of the clutch.

2. Centrifugal clutch according to claim 1, **characterised in that** the first set of teeth (28) is formed on a surface of the centrifugal weight (14) which is adjacent the coupling component (12) of the clutch above the predetermined speed of revolution.

3. Centrifugal clutch according to claim 1 or 2, **characterised in that** the second set of teeth (18) is formed on a wall (16) of the coupling component (12) of the clutch which is adjacent the centrifugal weight (14).

4. Centrifugal clutch according to at least one of the preceding claims, **characterised in that** the first set of teeth (28) and second set of teeth (18) are of identical forms.

5. Centrifugal clutch according to at least one of the preceding claims, **characterised in that** a spring member (22) is provided which applies force to the centrifugal weight (14) in the direction of the first position.

6. Centrifugal clutch according to claim 5, **characterised in that** the rotor (10) has a bore (20) in which the spring member (22) is arranged.

7. Centrifugal clutch according to claim 6, **characterised in that** bore (20) is formed perpendicularly to a longitudinal axis of the rotor (10).

8. Centrifugal clutch according to at least one of the preceding claims, **characterised in that** the centrifugal weight (14) takes the form of a sector of the rotor (10) forming a part annulus.

9. Centrifugal clutch according to at least one of the preceding claims, **characterised in that** the coupling component (12) of the clutch surrounds the rotor (10) circumferentially.

10. Centrifugal clutch according to claims 8 and 9, **characterised in that** the centrifugal weight (14) is supported on at least one surface (34) of the rotor (10) which is arranged in a plane parallel to a longitudinal axis of the rotor (10), and in particular on two such surfaces.

11. Fall arrest device, and in particular a runner for fall protection, which travels with a person to be safeguarded on a movable or fixed guide which acts as a safeguarding means and in particular on a safety rail, a fall protected ladder or a safety cable and which has a centrifugal clutch, **characterised in that** the centrifugal clutch is of a form as specified in at least one of the preceding claims.

## Revendications

1. Embrayage centrifuge comprenant un rotor (10) et un composant d'accouplement (12), dans lequel au moins une masse d'inertie (14) est agencée sur le rotor (10) avec possibilité de déplacement par rapport au rotor (10) et réalisée de telle façon que, au-dessous d'une vitesse de rotation prédéterminée du rotor (10), la masse d'inertie (14) est agencée à distance du composant d'accouplement (12) sur le rotor (10) dans une première position telle que le rotor (10) est librement rotatif par rapport au composant d'accouplement (12) et que, au-dessus de la vitesse de rotation prédéterminée du rotor (10) la masse d'inertie exécute sous l'effet d'une force centripète un mouvement par rapport au rotor (10) jusque dans une seconde position telle que la masse d'inertie (14) établit une coopération de forces mécanique entre le rotor (10) et le composant d'accouplement (12),
**caractérisé en ce que**
la masse d'inertie (14) comporte une première denture (28) et le composant d'accouplement (12) comporte une seconde denture (18) de telle façon que, au-dessus de la vitesse de rotation prédéterminée, la première denture (28) et la seconde denture (18) engrènent l'une dans l'autre et établissent de ce fait une liaison à coopération de formes entre le rotor (10) et le composant d'accouplement (12).

2. Embrayage centrifuge selon la revendication 1, **caractérisé en ce que** la première denture (28) est réalisée sur une surface, tournée vers le composant d'accouplement (12) au-dessus de la vitesse de rotation prédéterminée, de la masse d'inertie (14).

3. Embrayage centrifuge selon la revendication 1 ou 2, **caractérisé en ce que** la seconde denture (18) est réalisée sur une paroi (16), tournée vers la masse centrifuge (14), du composant d'accouplement (12).

4. Embrayage centrifuge selon l'une au moins des revendications précédentes, **caractérisé en ce que** la première denture (28) et la seconde denture (18) sont réalisées identiques.

5. Embrayage centrifuge selon l'une au moins des revendications précédentes, **caractérisé en ce qu'**il est prévu un élément de ressort (22) qui sollicite la masse d'inertie (14) avec une force en direction de la première position.

6. Embrayage centrifuge selon la revendication 5, **caractérisé en ce que** le rotor (10) comporte un perçage (20) dans lequel est agencé l'élément de ressort (22).

7. Embrayage centrifuge selon la revendication 6, **caractérisé en ce que** le perçage (20) est ménagé perpendiculairement à un axe longitudinal du rotor (10).

8. Embrayage centrifuge selon l'une au moins des revendications précédentes, **caractérisé en ce que** la masse d'inertie (14) est réalisée sous forme de segment annulaire du rotor (10).

9. Embrayage centrifuge selon l'une au moins des revendications précédentes, **caractérisé en ce que** le composant d'accouplement (12) entoure radialement le rotor (10).

10. Embrayage centrifuge selon la revendication 8 et 9, **caractérisé en ce que** la masse d'inertie (14) s'appuie sur au moins une surface (34), en particulier sur deux surfaces, du rotor (10) qui est/sont agencée(s) dans un plan parallèle à un axe longitudinal du rotor (10).

11. Appareil antichute, en particulier protecteur d'escalade, qui se déplace conjointement avec une personne à sécuriser sur un guidage mobile ou fixe servant de système de sécurité, en particulier un rail de sécurité, une échelle de protection ou un câble de sécurité, comprenant un embrayage centrifuge,
**caractérisé en ce que** l'embrayage centrifuge est réalisé conformément à l'une au moins des revendications précédentes.
